# EUROPÄISCHE PATENTSCHRIFT

(11) **EP 3 481 678 B1**
(45) Veröffentlichungstag und Bekanntmachung des Hinweises auf die Patenterteilung: **08.04.2020**
(21) Anmeldenummer: 17740671.7
(22) Anmeldetag: 06.07.2017
(51) Int. Cl.: B60R 21/232

(54) **GASSACK, INSBESONDERE FÜR EIN SEITENVORHANG-AIRBAG-SYSTEM, FAHRZEUGSICHERHEITSSYSTEM MIT EINEM SOLCHEN GASSACK UND MIT EINEM SOLCHEN GASSACK ODER FAHRZEUGSICHERHEITSSYSTEM AUSGESTATTETES FAHRZEUG**
AIRBAG, IN PARTICULAR FOR A SIDE-CURTAIN AIRBAG SYSTEM, VEHICLE SAFETY SYSTEM WITH SUCH AN AIRBAG AND VEHICLE EQUIPPED WITH SUCH AN AIRBAG OR VEHICLE SAFETY SYSTEM
AIRBAG, EN PARTICULIER POUR UN SYSTÈME D'AIRBAG RIDEAU LATÉRAL, SYSTÈME DE SÉCURITÉ POUR VÉHICULE COMPRENANT UN TEL AIRBAG, ET VÉHICULE MUNI D'UN TEL AIRBAG OU SYSTÈME DE SÉCURITÉ

(30) Priorität: 07.07.2016 DE 102016008242
(43) Veröffentlichungstag der Anmeldung: 15.05.2019
(73) Patentinhaber: Dalphi Metal España, S.A., 36213 Vigo (ES)
(72) Erfinder: PREGO DOMÍNGUEZ, Miguel Ángel, 36214 Vigo (ES); GONZÁLEZ LÓPEZ, Cristina, 36206 Vigo (ES)
(74) Vertreter: ZF TRW Patentabteilung
(86) Internationale Anmeldenummer: PCT/EP2017/066930
(87) Internationale Veröffentlichungsnummer: WO 2018/007521

(56) Entgegenhaltungen:
- EP-A2- 1 227 014
- WO-A1-2013/159916
- DE-A1-102014 000 863
- DE-U1-202015 000 764
- US-A1- 2015 314 746
- US-A1- 2016 096 491

## Beschreibung

Die Erfindung betrifft einen Gassack, für ein Seitenvorhang-Airbag-System gemäß dem Oberbegriff von Patentanspruch 1, ein Fahrzeugsicherheitssystem, das mit einem solchen Gassack ausgestattet ist gemäß dem Oberbegriff von Patentanspruch 8 sowie ein Fahrzeug gemäß dem Oberbegriff von Patentanspruch 9, das mit einem solchen Fahrzeugsicherheitssystem und/oder mit einem solchen Gassack ausgestattet ist.

Gassäcke für Airbag-Systeme, für Seitenvorhang-Airbag-Systeme, sind seit geraumer Zeit bekannt. Derartige Airbag-Systeme dienen dazu, Insassen eines Kraftfahrzeugs im Falle eines Unfalls zu schützen. Ein Seitenvorhang-Airbag-System ist zu diesem Zweck oberhalb einer Seitenscheibe angeordnet und entfaltet sich im Falle eines Unfalls vorhangartig nach unten, um auf diese Weise eine Kopf- und Schulterpartie eines Fahrzeuginsassen gegen einen Seitenaufprall zu schützen. Die DE 20 2015 000764 U1 zeigt einen derartigen Gassack für den Schutz der Kopf- und Schulterpartie, der ein zusätzliches Versteifungselemente aufweist.

Ein Nachteil dieser bislang bekannten Seitenvorhang-Airbag-Systeme besteht darin, dass diese einen Thoraxbereich des Fahrzeuginsassen nicht schützen und es somit zu massiven Verletzungen im Brustkorbbereich eines Fahrzeuginsassen kommen kann, der in einem mit einem solchen Seitenvorhang-Airbag-System ausgestatteten Fahrzeug sitzt.

Aus diesem Grund wurden in der Vergangenheit Airbag-Systeme vorgeschlagen, welche den Thoraxbereich eines Fahrzeuginsassen unter Zuhilfenahme eines zweiten Gassacks oder mittels einer zweiten Gassackkammer schützen, die auf Höhe des Thorax eines Fahrzeuginsassen angeordnet ist.

Ein Nachteil derartiger Airbag-Systeme, respektive Gassäcke, besteht darin, dass es sehr aufwendig ist, die unterschiedlichen Gassackkammern bzw. Gassäcke zeitlich so aufeinander abgestimmt zu füllen, dass die Kammern bzw. Gassäcke zur Gewährleistung eines optimalen Insassenschutzes zur richtigen Zeit korrekt gefüllt und korrekt positioniert sind.

Derartige Airbag-Systeme sind beispielsweise in der WO 2008/011414 A2, der US 7,350,804 B2 oder der US 2005/0134025 A1 beschrieben.

Der Erfindung liegt die Aufgabe zugrunde, unter Vermeidung der oben genannten Nachteile einen Gassack zur Verfügung zu stellen, der einen optimierten Thorax-Schutz bietet, in einfacher und kostengünstiger Weise herstellbar und auf einfache Weise handhabbar, d.h. für einen optimierten Fahrzeuginsassenschutz aufblasbar, ist. Des Weiteren ist es Aufgabe der Erfindung, ein Fahrzeugsicherheitssystem zur Verfügung zu stellen, das mit einem solchen Gassack ausgestattet ist, sowie ferner ein Fahrzeug zur Verfügung zu stellen, das mit einem solchen Fahrzeugsicherheitssystem und/oder mit einem solchen Gassack ausgestattet ist.

Diese Aufgabe wird durch einen Gassack gemäß Patentanspruch 1, ein Fahrzeugsicherheitssystem gemäß Patentanspruch 8 sowie ein Fahrzeug gemäß Patentanspruch 9 gelöst.

Der Gassack ist in einem seitlichen Dachbereich eines Kraftfahrzeugs angeordnet und entfaltet sich in einer dem Gassack zugeordneten Sitzreihe oder in mehreren einzelnen jeweiligen Gassackabschnitten zugeordneten Sitzreihen. Die Entfaltung des Gassacks erfolgt von oben nach unten, wobei sich der Gassack in Richtung einer Sitzfläche des der jeweiligen Sitzreihe zugeordneten Fahrzeugsitzes erstreckt, und zwar so weit, dass ein Thoraxbereich einer auf der Sitzfläche des Fahrzeugsitzes sitzenden Person durch den Gassack gegen einen Seitenaufprall geschützt ist. Die erfindungsgemäß betrachtete Person hat eine Körpergröße im Bereich von 140 cm bis 190 cm und weist die Proportionen eines Crashtest-Dummys auf.

Ein wesentlicher Punkt der Erfindung liegt darin, dass der erfindungsgemäße Gassack nur eine einzige Kammer umfasst, die sich bis in einen Thoraxbereich eines durch den Gassack zu schützenden Fahrzeuginsassen erstreckt. Aufgrund der Tatsache, dass der Gassack nur eine einzige Kammer umfasst, ist es in erfindungsgemäß äußerst vorteilhafter Weise möglich, den erfindungsgemäßen Gassack, respektive das Seitenvorhang-Airbag-System, im Bedarfsfall, d.h. beispielsweise in einem Crashfall, sehr schnell vollständig zu entfalten, ohne dass es für die Entfaltung des Seitenvorhang-Airbag-Systems einer aufwendigen Steuerung bedarf, wie diese beim Stand der Technik zwingend notwendig ist.

Darüber hinaus ermöglicht die Konstruktion des erfindungsgemäßen Gassacks als Ein-Kammer-Airbag-System eine äußerst einfache und kostengünstige Herstellungsweise und garantiert darüber hinaus aufgrund der an sich einfachen jedoch neuen und erfinderischen Konstruktion eine überaus große Handhabungssicherheit.

Gemäß einer Ausführungsform, weist der erfindungsgemäße Gassack wenigstens eine Gaszuführöffnung auf, die jeweils bezogen auf einen Einbauzustand des Gassacks in einem Kraftfahrzeug frontseitig und/oder mittig und/oder rückseitig des Gassacks angeordnet ist. Auf diese Weise kann eine Gasversorgungseinrichtung, insbesondere ein Gasgenerator, der erfindungsgemäß unmittelbar und direkt an die Gaszuführöffnung anschließbar ist, universell mit dem erfindungsgemäßen Gassack verbunden werden, so dass der erfindungsgemäße Gassack für einen Einbau im Bereich der Frontsitze und/oder Rücksitze und/oder, im Falle weiterer Sitzreihen, aller anderen Sitzreihen geeignet ist.

Gemäß einer weiteren Ausführungsform ist es möglich, für jede Sitzreihe einen einzelnen erfindungsgemäßen Gassack zu verwenden, der somit beispielsweise auch in Fahrzeugen mit zwei, drei und mehr Sitzreihen, wie beispielsweise einem Bus, verwendet werden kann. Insbesondere eignet sich das erfindungsgemäße Konzept für Airbags, die sich über eine oder zwei Fahrgastreihen erstrecken. In diesem Fall wird erfindungsgemäß das kombinierte Design eines erfindungsgemäßen Gassacks bevorzugt, der sich über die vordere und die hintere Sitzreihe gemeinsam erstreckt. In diesem Fall kann der Gasgenerator entweder in der A-Säule, der B-Säule oder der C-Säule des Kraftfahrzeugs angeordnet sein. Gemäß einer alternativen Ausführungsform ist die Verwendung einzelner Gassäcke zum Schutz der Passagiere in der vorderen und der hinteren Sitzreihe erfindungsgemäß möglich. Sofern der Vorhang-Airbag zum Schutz der hinteren Passagiere eines Kraftfahrzeugs vorgesehen ist, kann der Gasgenerator beispielsweise in der C-Säule des Kraftfahrzeugs angeordnet sein. Des Weiteren kann der Gasgenerator/Treibsatz, der gemeinsam mit dem neuartigen erfindungsgemäßen Gassack verwendet wird, auch in einem Winkel, beispielsweise in einem Winkel von vorzugsweise 90°, zur Entfaltungsebene des Vorhang-Airbags, d.h. beispielsweise in einer Dachebene eines Kraftfahrzeugs, angeordnet sein. Somit eignet sich das erfindungsgemäße neuartige Airbag-System besonders für herkömmliche Limousinen oder Kombis mit ein oder zwei Sitzreihen, jedoch insbesondere auch für MPVs, MiniVans, Vans, Pick-Ups und Busse sowie LKWs.

Je nach Anwendungsgebiet kann die Gasversorgungseinrichtung, respektive der Gasgenerator somit entweder frontseitig oder mittig oder rückseitig an dem Gassack angeordnet sein, je nachdem an welcher Stelle sich die Gasversorgungseinrichtung am praktischsten und vorteilhaftesten anbringen lässt.

Gemäß einer weiteren Ausführungsform kann ein von der Gasversorgungseinrichtung im Betriebszustand des Gassacks, d.h. während der Entfaltung des Gassacks, zur Verfügung gestelltes Gas unmittelbar und direkt in den Gassackinnenraum einströmen. Auf diese Weise ist erfindungsgemäß gewährleistet, dass der erfindungsgemäße Gassack im Bedarfsfall ohne Verzögerung befüllt wird und sich das einströmende Gas ohne Druckverlust in den Gassackinnenraum ergießen und die einzige Kammer des Gassacks füllen kann.

Gemäß einer bevorzugten Ausführungsform ist der Gassack einbautenfrei ausgebildet, so dass eine Entfaltung des Gassacks nicht durch etwaige Bänder, Gasleitsysteme oder Rückhaltesysteme behindert wird.

Wie bereits vorerwähnt, kann sich der erfindungsgemäße Gassack über eine Sitzreihe oder über zwei Sitzreihen oder über drei oder mehr Sitzreihen erstrecken. Sofern sich der erfindungsgemäße Gassack über zwei, drei oder mehr Sitzreihen erstreckt, ist die Gasversorgungseinrichtung bevorzugt mittig des Gassacks angeordnet, damit sich das einströmende Füllgas gleichzeitig in alle Gassackabschnitte ausbreitet und ein Insassenschutz in sämtlichen, dem Gassack zugeordneten Sitzreihen extrem schnell gewährleistet ist.

Gemäß einer weiteren Ausführungsform der Erfindung weist der Gassack im Bereich jeweils einer Sitzreihe im Wesentlichen eine, insbesondere um 180°, gekippte und/oder gespiegelte L-Form auf. Diese L-Form ist in Bezug auf einen Ein-Reihen-Airbag erfindungsgemäß dadurch erzeugt, dass ein in Seitenansicht im Wesentlichen rechtwinklig ausgebildeter Gassack in einer Ecke eine Ausnehmung aufweist. In vorteilhafter Weise ist so gewährleistet, dass sich der Gassack in entfaltetem Zustand an einen Fahrzeugsitz anschmiegt, wobei sich ein oberer Vorhangabschnitt des erfindungsgemäßen Gassacks über die Rückenlehne des Fahrzeugsitzes erstreckt, sodann jedoch der Rückenlehne abwärts in Richtung der Sitzfläche des Fahrzeugsitzes folgt. In analoger Weise weist der erfindungsgemäße Airbag im Falle eines Zwei-Reihen-Airbags oder eines Drei-Reihen-Airbags zwischen den den einzelnen Reihen zugeordneten Vorhang-Airbag-Abschnitten mit Thorax-Schutz jeweilige Ausnehmungen für die jeweiligen Rückenlehnen der Fahrzeugsitze auf.

Auf diese Weise ist in vorteilhafter Weise auch eine Kompatibilität des erfindungsgemäßen Gassacks, respektive Seitenvorhang-Airbag-Systems mit prinzipiell allen existierenden Fahrzeugsitzen und Fahrgastbänken gewährleistet. Letzteres ist insbesondere im Hinblick auf Lastkraftwagen und deren Fahrerkabinen sowie für Transporter und Busse besonders wichtig und vorteilhaft.

Gemäß einer weiteren Ausführungsform der Erfindung weist das erfindungsgemäße Fahrzeug zumindest einen Fahrzeugsitz auf, dem ein Gassack gemäß vorstehenden Ausführungen zugeordnet ist, wobei sich der Gassack in voll entfaltetem Betriebszustand mit einem dem Fahrzeugsitz nächstliegenden Abschnitt einer Sitzfläche des Fahrzeugsitzes bis auf eine Entfernung von im Bereich von 1 cm bis 35 cm, vorzugsweise bis auf eine Entfernung von im Bereich von 5 cm bis 30 cm, und besonders bevorzugt bis auf eine Entfernung von im Bereich von 15 cm bis 25 cm, nähert.

Die Vorteile der Erfindung lassen sich somit wie folgt zusammenfassen: Aufgrund des erfindungsgemäß vorgeschlagenen Ein-Kammer-Systems für einen Gassack kann Gas direkt und ungehindert aus einer Gasversorgungseinrichtung, wie beispielsweise einem Gasgenerator, in den Gassackinnenraum einströmen, ohne dass während des Einströmens Druckverluste oder sonstige Behinderungen auftreten. Dies ermöglicht erfindungsgemäß eine extrem schnelle Entfaltung und Befüllung des Gassacks und insbesondere eines für einen Thorax-Schutz vorgesehenen Abschnitts des erfindungsgemäßen Gassacks. Eine dezidierte Gasverteilung, wie diese beim Stand der Technik bislang notwendig war, findet erfindungsgemäß somit nicht statt.

Aufgrund des Ein-Kammer-Designs des erfindungsgemäßen Gassacks ist es möglich, kleinere Gasgeneratoren zu verwenden als diese bei gängigen Zweikammer-Systemen notwendig sind. In vorteilhafter Weise können erfindungsgemäß somit pyrotechnisch arbeitende Gasgeneratoren anstelle von Hybrid-Gasgeneratoren verwendet werden, was, insbesondere im Crashfall, aufgrund der reaktionsschnelleren Entfaltung eines pyrotechnisch arbeitenden Gasgenerators für den jeweiligen Insassen und aufgrund des Fehlens eines unter Druck stehenden Gasreservoirs für einen Retter zu einer erhöhten Sicherheit aufgrund des erfindungsgemäßen Gassacks beiträgt.

Da das erfindungsgemäße Gassack-Design zudem auf einem Ein-Kammer-System beruht, lässt sich der erfindungsgemäße Gassack zudem auf ein kleineres Packmaß packen, als dies bei gängigen Zweikammer-Systemen möglich ist. Ein weiterer sich daraus ergebender Vorteil besteht darin, dass das Gewicht des erfindungsgemäßen Gassacks gegenüber gängigen Zweikammer-Systemen deutlich reduziert ist. Im Vergleich zur Verwendung von mehreren Gassäcken zur Gewährleistung eines Fahrzeuginsassenschutzes ist der Vorteil eines geringeren Packmaßes sowie der Vorteil eines geringeren Gewichts des erfindungsgemäßen Gassacks noch einmal größer.

Weitere Ausführungsformen der Erfindung ergeben sich aus den Unteransprüchen.

Nachfolgend wird die Erfindung anhand von Ausführungsbeispielen beschrieben, die anhand der Abbildungen näher erläutert werden. Hierbei zeigen:
Fig. 1a bis 1d Airbag-Systeme gemäß dem Stand der Technik in schematischer Darstellung;
Fig. 1e eine schematische Darstellung eines Personenbeförderungsfahrzeugs mit drei Sitzreihen;
Fig. 2a bis 2f eine schematische Darstellung eines erfindungsgemäßen Ein-Reihen-Gassacks in Schnittansicht mit unterschiedlich angeordneten Gaszuführöffnungen und Gasgeneratoren gemäß einer weiteren erfindungsgemäßen Ausführungsform; und
Fig. 3 eine schematische Darstellung eines erfindungsgemäßen Zwei-Reihen-Gassacks in Schnittansicht gemäß einer weiteren erfindungsgemäßen Ausführungsform der Erfindung.

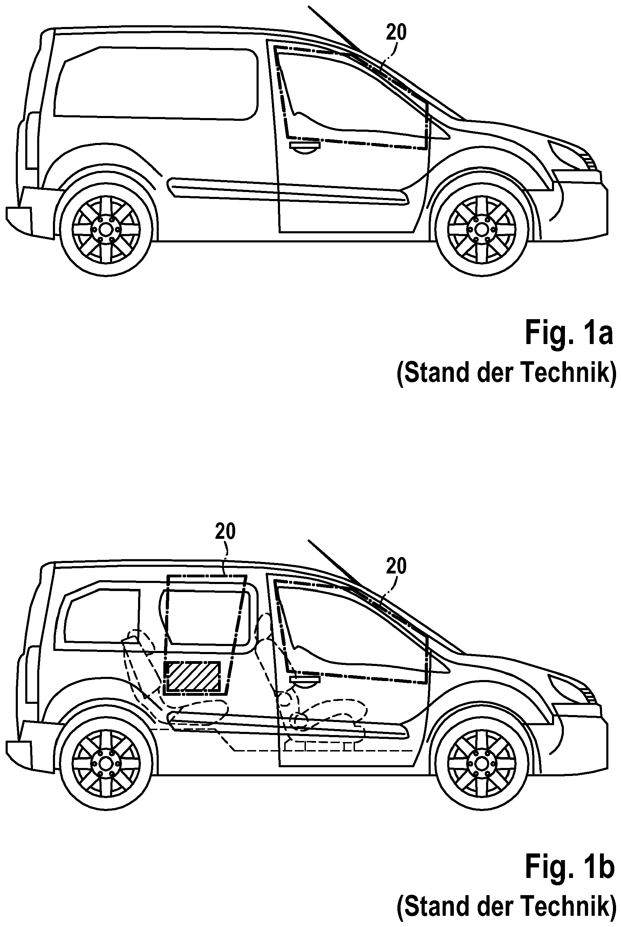

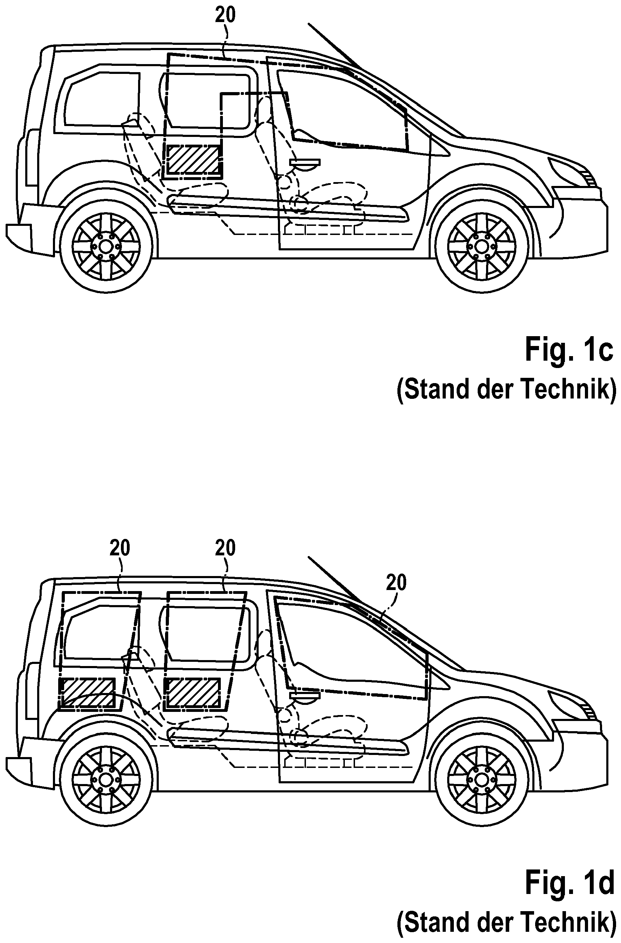

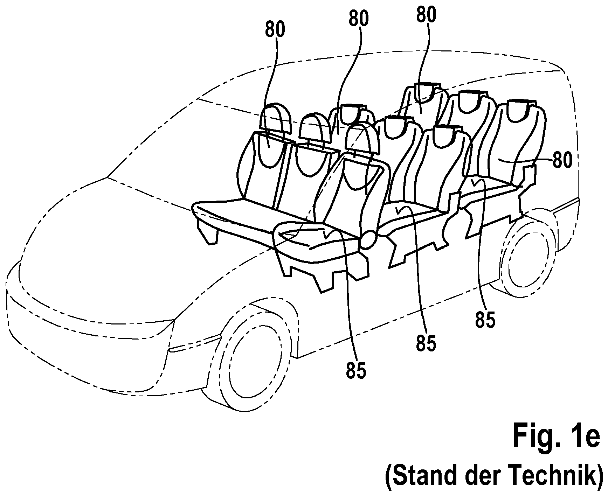

Die Fig. 1a bis Fig. 1d zeigen aus dem Stand der Technik bekannte Airbag-Systeme 20, die keinen oder einen, insbesondere für Kinder, unzureichenden Thorax-Schutz bieten. Das Airbag-System 20 gemäß Fig. 1a ist hierbei lediglich für die jeweiligen Frontsitze ausgelegt, während das Airbag-System 20 gemäß Fig. 1c sich über die hintere und vordere Sitzreihe erstreckt, wobei jedoch nur für die hintere Sitzreihe durch eine Zuhilfenahme einer zusätzlichen Gassackkammer ein Thorax-Schutz gewährleistet ist. Gemäß der in Fig. 1b gezeigten Ausführungsform sind für die vordere und die hintere Sitzreihe eines Kraftfahrzeugs zwei unterschiedliche Ein-Reihen-Airbags vorgesehen, wobei die jeweiligen Frontsitz-Airbags über keinen Thorax-Schutz verfügen und der Rücksitz-Airbag zwar einen Thorax-Schutz bietet, jedoch nur unter Zuhilfenahme einer zusätzlichen Gassackkammer innerhalb des existierenden Airbags. In Fig. 1d ist ein zu Fig. 1b analoges Seitenvorhang-Airbag-System gezeigt, das für ein Personenbeförderungsfahrzeug gemäß Fig. 1e mit drei Sitzreihen geeignet ist, die jeweils mehrere Fahrzeugsitze 80 mit zugeordneten Sitzflächen 85 aufweisen. Die jeweiligen Frontsitze verfügen wiederum über keinen Thorax-Schutz, während für die zweite und die dritte Sitzreihe unter Zuhilfenahme einer jeweiligen zusätzlichen Gassackkammer ein Thorax-Schutz zur Verfügung gestellt wird. Diese Ausführungsform ist besonders schwer anzusteuern, da pro Fahrzeugseite insgesamt 5 Airbagbereiche zeitgenau angesteuert werden müssen.

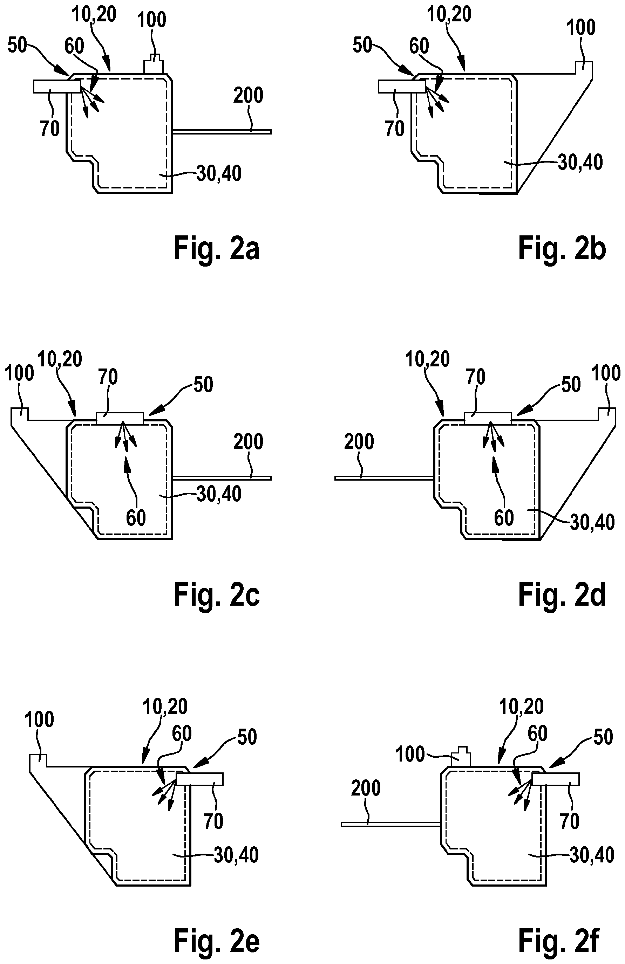

Die in den Fig. 2a bis 2f schematisch dargestellten Gassäcke 10 sind jeweils als Ein-Reihen-Gassäcke 10 ausgebildet, wobei sich die jeweiligen Abbildungen darin unterscheiden, dass die schematisch dargestellten Gassäcke 10, die in den Abbildungen mit a und b bezeichnet sind, eine Gaszuführöffnung 50 aufweisen, die in Fahrt-und Einbaurichtung vorne ausgebildet bzw. angeordnet ist, während die Gassäcke 10, die mit den Buchstaben c und d bezeichnet sind, eine Gaszuführöffnung 50 aufweisen, die in Fahrt-und Einbaurichtung mittig ausgebildet bzw. angeordnet ist, und die Gassäcke 10, die mit den Buchstaben e und f bezeichnet sind, eine Gaszuführöffnung 50 aufweisen, die in Fahrt-und Einbaurichtung rückseitig ausgebildet bzw. angeordnet ist. Den jeweiligen Gaszuführöffnungen 50 ist jeweils ein Gasgenerator zugeordnet.

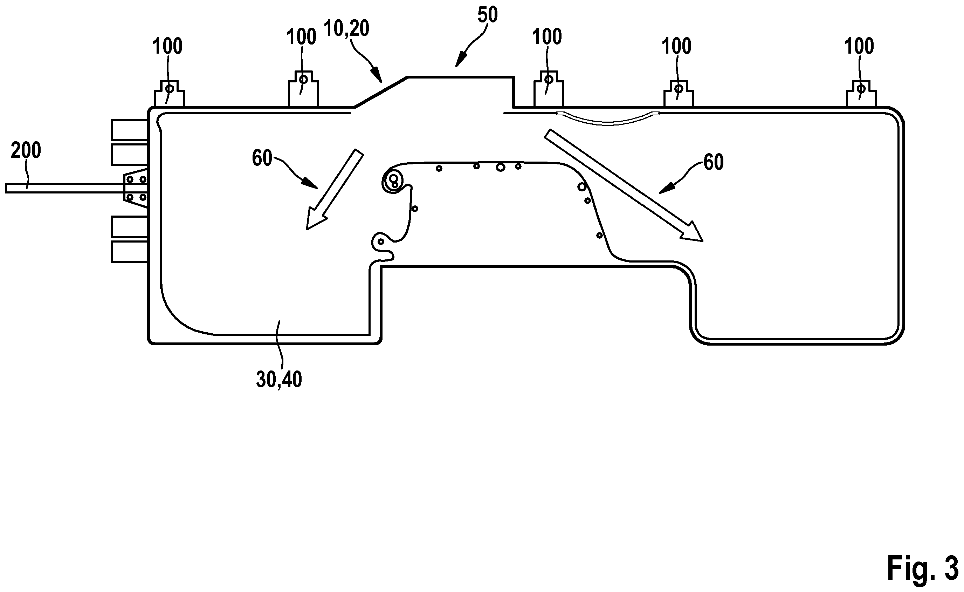

Gemäß den Fig. 2a bis 2f und 3 strömt das Füllgas jeweils entlang einer initialen Gaseinströmrichtung 60 durch die Gaszuführöffnung 50 in den Gassackinnenraum 30, der als eine einzige Kammer 40 ausgebildet ist.

Wie in den Fig. 2a bis 2f zu erkennen ist, kann sich das einströmende Füllgas hindernisfrei in dem erfindungsgemäßen Gassack 10 ausbreiten, so dass der erfindungsgemäße Gassack in kürzester Zeit optimal aufgeblasen ist und auf diese Weise in extrem schneller Zeit einen optimalen Schutz für den Fahrzeuginsassen zur Verfügung stellt. Der Schutz erstreckt sich hierbei von einem Kopfbereich über einen Schulterbereich bis in den Thoraxbereich des jeweiligen Fahrzeuginsassen. Wie in den Fig. 2a bis 2f zudem zu erkennen ist, kann die Gasversorgungseinrichtung 70 in der jeweiligen Einbaurichtung in einem Kraftfahrzeug frontseitig, wie in den Fig. 2a und Fig. 2b dargestellt, mittig, wie in den Fig. 2c und Fig. 2d dargestellt oder rückseitig, wie in den Fig. 2e und Fig. 2f dargestellt, angeordnet sein. Auf diese Weise eignet sich der erfindungsgemäße Gassack, respektive das erfindungsgemäße Seitenvorhang-Airbag-System optimal für eine Anordnung in einem Fahrzeug, wie beispielsweise einem MPV, MiniVan, Van, Pick-Up und Bus oder LKW.

Wie in den Fig. 2a bis 2f ferner zu erkennen ist, sind die jeweiligen Airbags, respektive Gassäcke 10 jeweils L-förmig ausgebildet, so dass sich die jeweiligen Gassäcke optimal an eine Fahrzeugsitz-Struktur anpassen, so dass kein ungeschützter Raum zwischen der Fahrzeugkarosserie und einem Fahrzeuginsassen vorhanden ist.

Fig. 3 zeigt eine schematische Schnittansicht eines erfindungsgemäßen Gassacks, der sich über zwei Sitzreihen erstreckt. Die Gaszuführöffnung 50 ist in Fig. 3 lediglich mit einem Bezugszeichen und Pfeil angedeutet. Durch diese Gaszuführöffnung 50 kann Füllgas von einer Gasversorgungseinrichtung (nicht gezeigt) in den Gassack 10 einströmen und sich entlang einer Gaseinströmrichtung 60 verbreiten, so dass der Gassackinnenraum 30, der aus einer einzigen Kammer besteht, sehr schnell und effektiv gefüllt wird, so dass ein Fahrzeuginsassenschutz extrem schnell zur Verfügung gestellt werden kann. Eine aufwändige Steuereinheit zur Füllung von, gemäß dem Stand der Technik notwendigen, Mehrkammersystemen, ist erfindungsgemäß nicht notwendig.

Die in den Figuren 2a bis 3 schematisch dargestellten, erfindungsgemäßen Gassäcke 10 sind jeweils mit Modulbefestigungen 100 sowie einem Band oder Gurt 200 versehen, die zur Anbringung der jeweiligen Gassäcke 10 an oder in einem Kraftfahrzeug dienen.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichenliste

- 10: Gassack
- 20: Seitenvorhang-Airbag-System
- 30: Gassackinnenraum
- 40: Kammer
- 50: Gaszuführöffnung
- 60: Gaseinströmrichtung
- 70: Gasversorgungseinrichtung, insbesondere Gasgenerator
- 80: Fahrzeugsitz
- 85: Sitzfläche
- 100: Modulbefestigung
- 200: Band oder Gurt

## Patentansprüche

1. Gassack (10) für ein Seitenvorhang-Airbag-System (20), wobei der Gassack einen Gassackinnenraum (30) aufweist, der als eine einzige Kammer (40) ausgebildet ist, die einen vertikalen Verlängerungsabschnitt (40) für einen Thorax-Schutz aufweist, sodass sich der Verlängerungsabschnitt (40) des Gassack (10) in einem in ein Kraftfahrzeug eingebauten und entfalteten Zustand, bis in einen Thoraxbereich eines durch den Gassack (10) zu schützenden Fahrzeuginsassen erstreckt.

2. Gassack nach Anspruch 1,
**dadurch gekennzeichnet, dass**
der Gassack (10) wenigstens eine Gaszuführöffnung (50) aufweist, die, jeweils bezogen auf einen Einbauzustand des Gassacks (10), frontseitig und/oder mittig und/oder rückseitig des Gassacks (10) angeordnet ist.

3. Gassack nach Anspruch 2,
**dadurch gekennzeichnet, dass**
eine Gasversorgungseinrichtung (60), insbesondere ein Gasgenerator, unmittelbar an die Gaszuführöffnung (50) anschließbar ist.

4. Gassack nach einem der vorhergehenden Ansprüche
**dadurch gekennzeichnet, dass**
im Betriebszustand des Gassacks von der Gasversorgungseinrichtung (60) zur Verfügung gestelltes Gas unmittelbar und direkt in den Gassackinnenraum (30) einströmen kann.

5. Gassack nach einem der vorhergehenden Ansprüche
**dadurch gekennzeichnet, dass**
der Gassack (10) einbautenfrei ist.

6. Gassack nach einem der vorhergehenden Ansprüche
**dadurch gekennzeichnet, dass**
sich der Gassack (10) über eine Sitzreihe oder über zwei Sitzreihen oder über drei Sitzreihen erstreckt.

7. Gassack nach einem der vorhergehenden Ansprüche
**dadurch gekennzeichnet, dass**
der Gassack (10) im Bereich jeweils einer Sitzreihe im Wesentlichen eine, insbesondere um 180°, gekippte und/oder gespiegelte L-Form aufweist.

8. Fahrzeugsicherheitssystem mit einem Gassack nach einem der vorhergehenden Ansprüche.

9. Fahrzeug mit einem Fahrzeugsicherheitssystem nach Anspruch 8 und/oder einem Gassack nach einem der vorhergehenden Ansprüche 1 bis 7.

10. Fahrzeug mit zumindest einem Fahrzeugsitz, dem ein Gassack (10) nach einem der vorhergehenden Ansprüche 1 bis 7 zugeordnet ist,
**dadurch gekennzeichnet, dass**
sich der Gassack (10) in voll entfaltetem Betriebszustand mit einem dem Fahrzeugsitz nächstliegenden Abschnitt einer Sitzfläche des Fahrzeugsitzes bis auf eine Entfernung von im Bereich von 1 cm bis 35 cm, vorzugsweise bis auf eine Entfernung von im Bereich von 5 cm bis 30 cm, und besonders bevorzugt bis auf eine Entfernung von im Bereich von 15 cm bis 25 cm, nähert.

## Claims

1. An airbag (10) for a side curtain airbag system (20), wherein the airbag comprises an airbag interior (30) in the form of one single chamber (40) having a vertical lengthened portion (40) for a thorax protection so that the vertical lengthened portion (40) of the airbag (10) extends in a vehicle-mounted and deployed state into a thorax area of a vehicle occupant to be protected by the airbag (10).

2. The airbag according to claim 1,
**characterized in that**
the airbag (10) includes at least one gas supply orifice (50) which is disposed, related to a respective mounting state of the airbag (10), on the front side and/or in the middle and/or on the rear side of the airbag (10).

3. The airbag according to claim 2,
**characterized in that**
a gas supply means (60), especially a gas generator, is adapted to be directly connected to the gas supply orifice (50).

4. The airbag according to any one of the preceding claims,
**characterized in that**
gas provided by the gas supply means (60) in the operating state of the airbag can flow immediately and directly into the airbag interior (30).

5. The airbag according to any one of the preceding claims,
**characterized in that**
the airbag (10) is free of fixtures.

6. The airbag according to any one of the preceding claims,
**characterized in that**
the airbag (10) extends over one seat row or over two seat rows or over three seat rows.

7. Airbag according to any one of the preceding claims,
**characterized in that**
in the area of a respective seat row the airbag (10) substantially takes a tilted, especially by 180°, and/or mirrored L-shape.

8. A vehicle safety system comprising an airbag according to any one of the preceding claims.

9. A vehicle comprising a vehicle safety system according to claim 8 and/or an airbag according to any one of the preceding claims 1 to 7.

10. A vehicle comprising at least one vehicle seat which an airbag (10) according to any one of the preceding claims 1 to 7 is associated with,
**characterized in that**
in the fully deployed operating state the airbag (10) approaches by a portion closest to the vehicle seat a seat cushion of the vehicle seat up to a distance within the range of from 1 cm to 35 cm, preferably up to a distance within the range of from 5 to 30 cm, and especially preferred up to a distance within the range of from 15 cm to 25 cm.

## Revendications

1. Coussin gonflable (10) pour un système d'airbag rideau latéral (20), pour lequel le coussin gonflable possède un intérieur de coussin gonflable (30), lequel est conçu comme une chambre unique (40),celle-ci présente une section d'extension verticale (40) pour une protection du thorax, de sorte que La section d'extension (40) du coussin gonflable (10), lorsqu'elle est installée et déployée dans un véhicule, s'étend jusque dans une zone thoracique d'un occupant de véhicule à protéger à l'aide d'un coussin gonflable (10).

2. Coussin gonflable selon la revendication 1,
**caractérisé en ce que**
le coussin gonflable (10) possède au moins une ouverture d'alimentation en gaz (50), laquelle est disposée à l'avant et/ou au centre et/ou à l'arrière du coussin gonflable (10), dans chaque cas sur la base d'un état installé du coussin gonflable (10).

3. Coussin gonflable selon la revendication 2,
**caractérisé en ce que**
un dispositif d'alimentation en gaz (60), en particulier un générateur de gaz, peut être connecté directement à l'ouverture d'alimentation en gaz (50).

4. Coussin gonflable selon l'une des revendications précédentes
**caractérisé en ce que**
dans l'état de fonctionnement du coussin gonflable, le gaz fourni par le dispositif d'alimentation en gaz (60) peut s'écouler sans intermédiaire et directement à l'intérieur du coussin gonflable (30).

5. Coussin gonflable selon l'une des revendications précédentes
**caractérisé en ce que**
le coussin gonflable (10) est libre de structures internes.

6. Coussin gonflable selon l'une des revendications précédentes
**caractérisé en ce que**
le coussin gonflable (10) s'étend sur une rangée de sièges ou sur deux rangées de sièges ou sur trois rangées de sièges.

7. Coussin gonflable selon l'une des revendications précédentes **caractérisé en ce que** le coussin gonflable (10) au niveau d'une rangée de sièges a essentiellement une forme en L, notamment incliné et/ou symétrique à 180 °.

8. Système de sécurité de véhicule avec un coussin gonflable selon l'une des revendications précédentes.

9. Véhicule avec un système de sécurité de véhicule selon la revendication 8 et/ou un coussin gonflable selon l'une des revendications précédentes 1 à 7.

10. Véhicule avec au moins un siège de véhicule auquel est associé un coussin gonflable (10) selon l'une des revendications 1 à 7 précédentes,
**caractérisé en ce que**
le coussin gonflable (10) à l'état de fonctionnement entièrement déployé se rapproche avec une section la plus proche du siège du véhicule d'une surface de siège du siège de véhicule jusqu'à une distance de l'ordre de 1 cm à 35 cm, de préférence jusqu'à une distance de l'ordre de 5 cm à 30 cm, et de manière particulièrement préférée jusqu'à une distance de l'ordre de 15 cm à 25 cm.
